# NOUVEAU FASCICULE DE BREVET EUROPEEN

(11) **EP 0 174 244 B2**
(45) Date de publication et mention de la décision concernant l'opposition: **03.05.1995**
(45) Mention de la délivrance du brevet: 18.04.1990
(21) Numéro de dépôt: 85401636.7
(22) Date de dépôt: 13.08.1985
(51) Int. Cl.: C08F 210/02, C08F 2/00

(54) **Nouveau procédé de fabrication de terpolymères radicalaires de l'éthylène et de copolymères radicalaires de l'éthylène**
Verfahren zur Herstellung von Radikal-Terpolymeren von Äthylen und Radikal-Copolymeren von Äthylen
Process for the manufacture of radical ethylene terpolymers and radical ethylene copolymers

(30) Priorité: 23.08.1984 FR 8413137
(43) Date de publication de la demande: 12.03.1986
(73) Titulaire: ELF ATOCHEM S.A., 92800 Puteaux (FR)
(72) Inventeur: Gloriod, Pierre, F-71670 Lillebonne (FR); Audureau, Joel, F-62290 Noeux les Mines (FR); Pellegrini, Maurice, F-62800 Lievin (FR)
(74) Mandataire: Ahner, Francis

(56) Documents cités:
- DD-A- 89 485
- DD-A- 137 443
- FR-A- 2 498 609
- GB-A- 2 091 745
- US-A- 2 396 785
- Ullmans Enzyklopädie der technischen Chemie, 1980, 4 Auflage, Band 19, 167-178
- Advances in Polymer Science, Springer Verlag 1970/71, Vol 7, pp 386-448. P Ehrlich & G A Mortimer, 'Fundamentals of the Free-Radical Polymerization of Ethylene'.
- Ullmanns Encyklopädie der technischen Chemie, Band 12, 1960, pp 186-187
- Polymer Handbook, second edition, 1975. John Wiley & Sons Inc, New York. L J Young, ' Transfer Constants to Monomer, Polymer, Catalyst and Solvent in Free Radical Polymerization'. pages II-57, II-71, II-75, II-98

## Description

La présente invention concerne un nouveau procédé de fabrication de terpolymères de l'éthylène ainsi que de copolymères de l'éthylène.

Plus précisément, l'invention concerne un nouveau procédé de fabrication de terpolymères radicalaires de l'éthylène comprenant des motifs dérivés d'un (méth)acrylate et des motifs dérivés de l'anhydride maléique, ainsi que de copolymères radicalaires de l'éthylène comprenant des motifs dérivés d'un (méth)acrylate et de copolymères radicalaires de l'éthylène comprenant des motifs dérivés de l'anhydride maléique.

Dans sa demande de brevet français n° 2.498.609, la demanderesse a décrit un procédé de fabrication de terpolymères de l'éthylène comprenant des motifs dérivés d'un ester (méth)acrylique et des motifs dérivés de l'anhydride maléique, par copolymérisation à haute pression, en présence d'au moins un initiateur de radicaux libres, d'un mélange d'éthylène, d'ester (méth)acrylique et d'anhydride maléique. Dans le procédé décrit dans le brevet n° 2.498.609 l'introduction des monomères ester (méth)acrylique et anhydride maléique dans le réacteur de polymérisation est effectuée par pompage sous pression d'une solution d'anhydride maléique dans l'ester (méth)acrylique, mélange de cette solution avec le flux d'éthylène et homogénéisation de ce mélange avant sont alimentation dans le réacteur de polymérisation, ladite homogénéisation étant effectuée dans un homogénéiseur du type Venturi puis dans un homogénéiseur à spirale.

La demanderesse a découvert, d'une façon suprenante, que dans un tel procédé de fabrication de terpolymères de l'éthylène comprenant des motifs dérivés d'un ester (méth)acrylique et des motifs dérivés de l'anhydride maléique, les monomères ester (méth)acrylique et anhydride maléique pouvaient être introduits dans le réacteur de polymérisation en étant alimentés directement dans ledit réacteur, c'est-à-dire indépendamment du flux d'éthylène.

La présente invention fournit donc un procédé de fabrication de terpolymères radicalaires de l'éthylène comprenant des motifs dérivés d'au moins un (méth)acrylate d'alkyle (le groupe alkyle possédant de 1 à 6 atomes de carbone) et des motifs dérivés de l'anhydride maléique par copolymérisation, en présence d'au moins un initiateur de radicaux libres, d'un mélange d'éthylène, de (méth)acrylate et d'anhydride maléique dans un dispositif comprenant un compresseur primaire dont la pression de refoulement est comprise entre 200 et 300 bars relié à un compresseur secondaire qui est relié directement à un réacteur de polymérisation, dans lequel l'éthylène frais est alimenté à l'aspiration dudit compresseur primaire et ladite copolymérisation est effectuée dans ledit réacteur de polymérisation sous une pression comprise entre 1000 et 2500 bars et à une température comprise entre 140 et 280°C caractérisé par le fait qu'au moins un des monomères (méth)acrylate et anhydride maléique est alimenté directement dans ledit reacteur de polymérisation, c'est-à-dire indépendamment du flux d'éthylène en présence d'un solvant répondant aux exigences suivantes :
- être un bon solvant dudit monomère,
- avoir une constante de transfert vis-à-vis de l'éthylène négligeable, et
- avoir un point d'ébullition compris entre 100 et 250°C.

De façon inattendue, malgré l'absence d'homogénéisation des monomères avant leur introduction dans le réacteur, la copolymérisation se réalisé très bien selon la présente invention.

Plusieurs modes de réalisation peuvent être envisagés pour préparer des terpolymères selon la présente invention, apportant une grande souplesse au procédé revendiqué.

Dans un premier mode de réalisation de l'invention, les monomères (méth)acrylate et anhydride maléique sont introduits tous deux directement, c'est-à-dire indépendamment du flux d'éthylène, dans le réacteur sous forme d'une solution d'anhydride maléique dans le (méth)acrylate.

Selon une variante de ce premier mode de réalisation, un appoint en (méth)acrylate est alimenté à l'aspiration du compresseur secondaire. Selon une autre variante de ce premier mode de réalisation, un appoint en anhydride maléique est alimenté à l'aspiration du compresseur secondaire.

Dans un second mode de réalisation de l'invention, l'anhydride maléique est alimenté directement, c'est-à-dire indépendamment du flux d'éthylène, dans le réacteur et le (méth)acrylate est alimenté à l'aspiration du compresseur secondaire.

Dans un troisième mode de réalisation de l'invention, le (méth)acrylate est alimenté directement, c'est-à-dire indépendamment du flux d'éthylène, dans le réacteur et l'anhydride maléique est alimenté à l'aspiration du compresseur secondaire.

En faisant varier la localisation des comonomères dans le réacteur, on peut jouer sur la répartition des motifs monomères et la distribution moléculaire du terpolymère obtenu.

Quand on introduit l'anhydride maléique seul selon la présente invention, que ce soit à l'aspiration du compresseur secondaire ou directement dans le réacteur de polymérisation, il est nécessaire de l'alimenter sous forme d'une solution dans un solvant de l'anhydride maléique, dont les caractéristiques sont indiquées ci-après.

L'introduction de (méth)acrylate et d'anhydride maléique dans le réacteur, selon la présente invention est effectuée sous forme d'une solution d'anhydride maléique dans le (méth)acrylate pour des concentrations en anhydride maléique inférieures à environ 300 g/l, ou bien sous forme d'une solution d'anhydride maléique et de (méth)acrylate dans un solvant de l'anhydride maléique.

Ledit solvant de l'anhydride maléique doit satisfaire aux exigences suivantes:
- être un bon solvant de l'anhydride maléique,
- avoir une constante de transfert vis-à-vis de l'éthylène négligeable,
- avoir un point d'ébullition compris entre 100 et 250°C.

Des solvants de l'anhydride maléique pouvant être utilisés selon l'invention sont par exemple le carbonate de propylène et la diméthylformamide.

Certains (méth)acrylates seront également alimentés selon la présente invention en solution dans un solvant répondant aux exigences suivantes:
- bonne solubilité du (méth)acrylate,
- constante de transfert vis-à-vis de l'éthylène négligeable,
- point d'ébullition compris entre 100 et 250°C.

Les terpolymères pouvant être fabriqués selon le procédé de la présente invention comprennent:
- 50 à 99,2% en poids de motifs dérivés de l'éthylène,
- 0,5 à 40% en poids de motifs dérivés d'un (méth)acrylate,
- 0,3 à 10% en poids de motifs dérivés de l'anhydride maléique.

Leur indice de fluidité est compris entre 0,1 et 500 dg/min. Le réacteur de polymérisation utilisable selon l'invention peut être un réacteur tubulaire ou un réacteur autoclave et il peut comprendre une ou plusieurs zones.

Le fond du réacteur peut être muni d'une vanne de détente permettant d'abaisser la pression à environ 250 bars. Le mélange du terpolymère obtenu fondu et des monomères non consommés traverse ladite vanne de détente et est envoyé dans un séparateur fonctionnant sous moyenne pression. Le terpolymère est recueilli au fond dudit séparateur tandis que les monomères non consommés sont recyclés, après refroidissement et décantation-séparation des polymères à bas poids moléculaire (inférieur ou égal à 5000) qu'ils contiennent, à l'aspiration du compresseur secondaire. Le fond du séparateur moyenne pression peut être muni d'une vanne de détente reliée à une trémie basse pression au fond de laquelle on recueille le terpolymère, les retours de la trémie basse pression étant recyclés à l'aspiration du compresseur primaire.

Comme cela a été mentionné plus haut, le compresseur secondaire est relié directement au réacteur de polymérisation; sa pression de refoulement est donc égale à celle du réacteur, aux pertes de charge près.

Les initiateurs de radicaux libres utilisables selon l'invention sont les initiateurs utilisés de façon classique dans de tels procédés de polymérisation haute pression, tels par exemple le peroxydicarbonate de 2-éthylhexyle, le peroxyde de ditertiobutyle, le perbenzoate de tertiobutyle, l'éthyl-2 perhexanoate de tertiobutyle et le peroxyde d'isopropanoyle.

On peut utiliser simultanément plusieurs initiateurs dans une même zone du réacteur. Comme cela est bien connu de l'homme de l'art, le choix du ou des initiateurs est fonction de la température de polymérisation.

De façon connue, on peut introduire dans le mélange réactionnel un agent de transfert pour contrôler la masse moléculaire du produit obtenu. De tels agents de transfert sont par exemple les alcanes, tels le propane et le butane, les oléfines, en particulier les α-oléfines, les aldéhydes, les cétones, etc.

Les terpolymères fabriqués selon la présente invention trouvent des applications multiples, notamment dans les compositions pour produits d'étanchéité, l'enduction de métaux, les colles thermofusibles, décrites dans les brevets français 2.505.731, 2.505.859 et 2.504.933 de la demanderesse.

Le présente invention fournit également un procédé permettant de fabriquer des copolymères radicalaires de l'éthylène comprenant des motifs dérivés d'un second monomère choisi parmi les (méth)acrylates et l'anhydride maléique par copolymérisation en présence d'au moins un initiateur de radicaux libres d'un mélange d'éthylène et dudit second monomère dans un dispositif comprenant un compresseur primaire dont la pression de refoulement est comprise entre 200 et 300 bars relié à un compresseur secondaire qui est relié directement à un réacteur de polymérisaton, dans lequel l'éthylène frais est alimenté à l'aspiration dudit compresseur primaire et ladite copolymérisation est effectuée dans ledit réacteur de polymérisation à une pression comprise entre 1000 et 2500 bars et à une température comprise entre 140 et 280°C, caractérisé par le fait que ledit second monomère est alimenté directement dans ledit réacteur de polymérisation, c'est-à-dire indépendamment du flux d'éthylène en présence d'un solvant répondant aux exigences suivantes :
- être un bon solvant dudit monomère,
- avoir une constante de transfert vis-à-vis de l'éthylène négligeable, et
- avoir un point d'ébullition comprise entre 100 et 250°C.

Le second monomère peut, si nécessaire, être introduit selon la présente invention en solution dans un solvant dont les caractéristiques sont celles indiquées ci-dessus, c'est-à-dire:
- bon pouvoir solvant dudit second monomère
- constante de transfert vis-à-vis de l'éthylène négligeable
- point d'ébullition compris entre 100 et 250°C.

Les initiateurs de radicaux libres utilisables pour la fabrication des copolymères selon l'invention sont les mêmes que ceux mentionnés ci-dessus.

Le procédé de la présente invention permet de fabriquer des copolymères radicalaires comprenant 60 à 99,5% en poids de motifs dérivés de l'éthylène et 0,5 à 40% en poids de motifs dérivés d'un méth(acrylate) ainsi que des copolymères radicalaires comprenant 90 à 99,7% en poids de motifs dérivés de l'éthylène et 0,3 à 10% en poids de motifs dérivés de l'anhydride maléique.

Les exemples suivants illustrent l'invention de façon non limitative.

### Exemple 1

Dans un dispositif comprenant un compresseur primaire dont la pression de refoulement est égale à 250 bars, un compresseur secondaire relié à un réacteur de polymérisation haute pression, on alimente le réacteur avec 62 l/h d'une solution à 400 g/l d'anhydride maléique dans un mélange 80% d'acrylate d'éthyle-20% de carbonate de propylène. Le débit d'éthylène alimenté est de 7 t/h. Le réacteur travaille à une pression de 1800 bars et à une température de 195°C.

On recueille 0,7 t/h de résine terpolymère contenant 3,5% en poids de motifs dérivés de l'anhydride maléique et 4,5% en poids de motifs dérivés de l'acrylate d'éthyle et ayant un indice de fluidité de 6 dg/min.

### Exemple 2

On utilise le même dispositif que dans l'exemple 1.

On alimente le réacteur avec 62 l/h de la même solution d'anhydride maléique que dans l'exemple 1. Le débit d'éthylène alimenté est de 7 t/h. Le réacteur travaille à une pression de 1900 bars et à une température de 195°C. On alimente en plus 200 l/h d'acrylate d'éthyle à l'aspiration du compresseur secondaire.

On recueille 0,7 t/h de résine terpolymère contenant 3,5% en poids de motifs dérivés de l'anhydride maléique et 30% en poids de motifs dérivés de l'acrylate d'éthyle et ayant un indice de fluidité de 18 dg/min.

### Exemple 3

On utilise le même dispositif que dans l'exemple 1.

On alimente le réacteur avec 80 l/h d'acrylate d'éthyle. Le débit d'éthylène alimenté est de 10 t/h. Le réacteur travaille à une pression de 1600 bars et à une température de 250°C.

On recueille 1,4 t/h de résine copolymère comprenant 5% en poids de motifs dérivés de l'acrylate d'éthyle et ayant un indice de fluidité de 0,2 dg/min.

### Exemple 4

On utilise le même dispositif que dans l'exemple 1.

On alimente le réacteur avec 1 l/h d'une solution à 400 g/l d'anhydride maléique dans du carbonate de propylène. Le débit d'éthylène alimenté dans le réacteur est de 100 kg/h.

Le réacteur travaille à une pression de 1700 bars et à une température de 205°C.

On recueille 10 kg/h d'une résine copolymère comprenant 4% en poids de motifs dérivés de l'anhydride maléique et ayant un indice de fluidité de 8 dg/min.

## Revendications

1. Procédé de fabrication de terpolymères radicalaires de l'éthylène comprenant 50 à 99,2% en poids de motifs dérivés de l'éthylène, 0,5 à 40% en poids de motifs dérivés d'au moins un (méth)acrylate d'alkyle le groupe alkyle ayant de 1 à 6 atomes de carbone et 0,3 à 10% en poids de motifs dérivés de l'anhydride maléique, par copolymérisation, en présence d'au moins un initiateur de radicaux libres, d'un mélange d'éthylène, de (méth)acrylate et d'anhydride maléique, dans un dispositif comprenant un compresseur primaire dont la pression de refoulement est comprise entre 200 et 300 bars relié à un compresseur secondaire qui est relié directement à un réacteur de polymérisation, dans lequel l'éthylène frais est alimenté à l'aspiration dudit compresseur primaire et ladite copolymérisation est effectuée dans ledit réacteur de polymérisation sous une pression comprise entre 1000 et 2500 bars et à une température comprise entre 140 et 280°C, caractérisé par le fait qu'au moins un des monomères (méth)acrylate et anhydride maléique est alimenté directement dans ledit réacteur de polymérisation, c'est-à-dire indépendamment du flux d'éthylène, en présence d'un solvant répondant aux exigences suivantes :
- être un bon solvant dudit monomère,
- avoir une constante de transfert vis-à-vis de l'éthylène négligeable, et
- avoir un point d'ébullition compris entre 100 et 250°C.

2. Procédé selon la revendication 1, caractérisé en ce que le solvant est le carbonate de propylène.

3. Procédé selon l'une des revendications 1 ou 2 dans lequel on introduit directement dans ledit réacteur à la fois le (méth)acrylate et l'anhydride maléique.

4. Procédé selon l'une des revendications 1 à 3 dans lequel on alimente un appoint en (méth)acrylate à l'aspiration dudit compresseur secondaire.

5. Procédé selon l'une des revendications 1 à 3 dans lequel on alimente un appoint en anhydride maléique à l'aspiration dudit compresseur secondaire.

6. Procédé selon l'une des revendications 1 ou 2 dans lequel l'anhydride maléique est alimenté directement dans ledit réacteur et le (méth)acrylate est alimenté à l'aspiration dudit compresseur secondaire.

7. Procédé selon l'une des revendications 1 ou 2 dans lequel le (méth)acrylate est alimenté directement dans ledit réacteur et l'anhydride maléique est alimenté à l'aspiration dudit compresseur secondaire.

8. Procédé de fabrication de copolymères radicalaire de l'éthylène comprenant des motifs dérivés d'un second monomère choisi parmi les (méth)acrylates et l'anhydride maléique, par copolymérisation, en présence d'au moins un initiateur de radicaux libres, d'un mélange d'éthylène et dudit second monomère dans un dispositif comprenant un compresseur primaire dont la pression de refoulement est comprise entre 200 et 300 bars relié à un compresseur secondaire, qui est relié directement à un réacteur de polymérisation dans lequel l'éthylène frais est alimenté à l'aspiration dudit compresseur primaire et ladite copolymérisation est effectuée dans ledit réacteur de polymérisation à une pression comprise entre 1000 et 2500 bars et à une température comprise entre 140 et 280°C, caractérisé par le fait que ledit second monomère est alimenté directement dans ledit réacteur, c'est-à-dire indépendemment du flux d'éthylène, en présence d'un solvant répondant aux exigences suivantes :
- être un bon solvant dudit monomère,
- avoir une constante de transfert vis-à-vis de l'éthylène négligeable, et
- avoir un point d'ébullition compris entre 100 et 250°C.

9. Procédé selon la revendication 8, caractérisé en ce que le solvant est le carbonate de propylène.

10. Procédé selon l'une des revendications 8 ou 9 dans lequel ledit second monomère est l'anhydride maléique dont la teneur dans le copolymère est comprise entre 0,3 et 10% en poids, la teneur en éthylène étant de 90 à 99,7% en poids.

## Claims

1. Process for the manufacture of radical ethylene terpolymers comprising 50 to 99.2 % by weight of moieties derived from ethylene, 0.5 to 40 % by weight of moieties derived from at least one alkyl (meth)acrylate the alkyl group having from 1 to 6 carbon atoms and 0.3 to 10 % by weight of moieties derived from maleic anhydride, by copolymerization, in the presence of at least one free-radical initiator, of a mixture of ethylene, (meth)acrylate and maleic anhydride in a device comprising a primary compressor the delivery pressure of which is between 200 and 300 bars, connected to a secondary compressor which is connected directly to a polymerization reactor, in which fresh ethylene is fed at the suction of the said primary compressor and the said copolymerization is carried out in the said polymerization reactor at a pressure of between 1000 and 2500 bars and at a temperature of between 140 and 280°C, characterized in that at least one of the (meth)acrylate and maleic anhydride monomers is fed directly into the said polymerization reactor, that is to say independently of the ethylene stream, in the presence of a solvent which meets the following requirements:
- of being a good solvent for the said monomer
- of having a negligible transfer constant in respect of ethylene, and
- of having a boiling point between 100 and 250°C.

2. Process according to Claim 1, characterized in that the solvent is propylene carbonate.

3. Process according to either of Claims 1 and 2, in which the (meth)acrylate and maleic anhydride are introduced directly into the said reactor at the same time.

4. Process according to one of Claims 1 to 3, in which additional (meth)acrylate is fed at the suction of the said secondary compressor.

5. Process according to one of Claims 1 to 3, in which additional maleic anhydride is fed at the suction of the said secondary compressor.

6. Process according to either of Claims 1 and 2, in which maleic anhydride is fed directly into the said reactor and the (meth)acrylate is fed at the suction of the said secondary compressor.

7. Process according to either of Claims 1 and 2, in which the (meth)acrylate is fed directly into the said reactor and maleic anhydride is fed at the suction of the said secondary compressor.

8. Process for the manufacture of radical ethylene copolymers comprising moieties derived from a second monomer chosen from (meth)acrylates and maleic anhydride, by copolymerization, in the presence of at least one free-radical initiator, of a mixture of ethylene and the said second monomer in a device incorporating a primary compressor the delivery pressure of which is between 200 and 300 bars connected to a secondary compressor which is connected directly to a polymerization reactor, in which fresh ethylene is fed at the suction of the said primary compressor and the said copolymerization is carried out in the said polymerization reactor at a pressure between 1000 and 2500 bars and at a temperature between 140 and 280°C, characterized in that the second monomer is fed directly into the said reactor, that is to say independently of the ethylene stream, in the presence of a solvent which meets the following requirements:
- of being a good solvent for the said monomer
- of having a negligible transfer constant in respect of ethylene, and
- of having a boiling point between 100 and 250°C.

9. Process according to Claim 8, characterized in that the solvent is propylene carbonate.

10. Process according to either of Claims 8 and 9, in which the said second monomer is maleic anhydride, whose concentration in the copolymer is between 0.3 and 10 % by weight, the concentration of ethylene being 90 to 99.7 % by weight.

## Patentansprüche

1. Verfahren zur Herstellung von Radikal-Terpolymeren des Ethylens, enthaltend 50 - 99,2 Gewichts-% von Einheiten, abgeleitet von Ethylen, 0,5 - 40 Gewichts-% von Einheiten, abgeleitet von wenigstens einem Alkyl(meth)acrylat, wobei die Alkylgruppe 1- 6 Kohlenstoffatome hat und 0,3 - 10 Gewichts-% von Einheiten, abgeleitet von Maleinsäureanhydrid, durch Copolymerisation, in Gegenwart wenigstens eines Bildners von freien Radikalen, einer Mischung von Ethylen, (Meth)acrylat und Maleinsäureanhydrid in einer Vorrichtung umfassend einen ersten Kompressor, dessen Förderdruck von 200 bis 300 bar beträgt und der verbunden ist mit einem zweiten Kompressor, der direkt verbunden ist mit einem Polymerisationsreaktor, in den das frische Ethylen zugeführt wird durch die Saugwirkung des genannten ersten Kompressors und in dem die genannte Copolymerisation bewirkt wird in dem genannten Polymerisationsreaktor unter einem Druck von 1.000 bis 2.500 bar und bei einer Temperatur von 140 bis 280 °C, dadurch gekennzeichnet, daß wenigstens eines der Monomeren (Meth)acrylat und Maleinsäureanhydrid direkt in den genannten Polymerisationsreaktor zugeführt wird, d. h. unabhängig vom Fluß des Ethylens in Gegenwart eines Lösemittels, das den folgenden Anforderungen entspricht:
- ein gutes Lösemittel für das genannte Monomer zu sein,
- eine vernachlässigbare Übertragungskonstante gegenüber dem Ethylen zu haben und
- einen Siedepunkt von 100 bis 250 °C zu haben.

2. Verfahren nach Anspruch 1, dadurch gekennzeichnet, daß das Lösemittel Propylencarbonat ist.

3. Verfahren nach einem der Ansprüche 1 oder 2, bei dem man das (Meth)acrylat und das Maleinsäureanhydrid zugleich direkt in den genannten Reaktor einführt.

4. Verfahren nach einem der Ansprüche 1 bis 3, bei dem man zusätzliches Methacrylat durch die Saugwirkung des genannten zweiten Kompressors zuführt.

5. Verfahren nach einem der Ansprüche 1 bis 3, bei dem man zusätzliches Maleinsäureanhydrid durch die Saugwirkung des genannten zweiten Kompressors zuführt.

6. Verfahren nach einem der Ansprüche 1 oder 2, bei dem das Maleinsäureanhydrid direkt dem genannten Reaktor zugeführt wird und das (Meth)acrylat durch die Saugwirkung des genannten zweiten Kompressors zugeführt wird.

7. Verfahren nach einem der Ansprüche 1 oder 2, bei dem das (Meth)acrylat direkt dem genannten Reaktor zugeführt wird und das Maleinsäureanhydrid zugeführt wird durch die Saugwirkung des genannten zweiten Kompressors.

8. Verfahren zur Herstellung von Radikal-Copolymeren des Ethylens, enthaltend Einheiten abgeleitet von einem zweiten Monomer, ausgewählt unter den (Meth)acrylaten und dem Maleinsäureanhydrid, durch Copolymerisation, in Gegenwart wenigstens eines Bildners von freien Radikalen, einer Mischung des Ethylens und des genannten zweiten Monomers in einer Vorrichtung umfassend einen ersten Kompressor, dessen Förderdruck von 200 bis 300 bar beträgt, der verbunden ist mit einem zweiten Kompressor, der verbunden ist direkt mit einem Polymerisationsreaktor, in den das frische Ethylen zugeführt wird durch die Saugwirkung des genannten ersten Kompressors und die genannte Copolymerisation bewirkt wird in dem genannten Polymerisationsreaktor bei einem Druck von 1.000 bis 2.500 bar und bei einer Temperatur von 140 bis 280 °C, dadurch gekennzeichnet, daß das genannte zweite Monomer direkt in den genannten Reaktor zugeführt wird, d. h. unabhängig vom Fluß des Ethylens in Gegenwart eines Lösemittels, das den folgenden Anforderungen genügt:
- ein gutes Lösemittel für das genannte Monomer zu sein,
- eine vernachlässigbare Übertragungskonstante gegenüber dem Ethylen zu haben und
- einen Siedepunkt von 100 bis 250 °C zu haben.

9. Verfahren nach Anspruch 8, dadurch gekennzeichnet, daß das Lösemittel Propylencarbonat ist.

10. Verfahren nach einem der Ansprüche 8 oder 9, bei dem das genannte zweite Monomer Maleinsäureanhydrid ist, dessen Gehalt in dem Copolymer von 0,3 bis 10 Gewichts-% beträgt, wobei der Gehalt an Ethylen 90 - 99,7 Gewichts-% beträgt.
